# DEMANDE DE BREVET EUROPEEN

(11) **EP 1 375 395 A1**
(43) Date de publication de la demande: **02.01.2004**
(21) Numéro de dépôt: 03291543.1
(22) Date de dépôt: 24.06.2003
(51) Int. Cl.: B65G 47/90, B08B 9/42, B25J 15/00

(54) **Pince de retenue d'un objet tel qu'une bouteille ou un recipient similaire**

(30) Priorité: 24.06.2002 FR 0207813
(71) Demandeur: MAPCO, F-68720 Illfurth (FR)
(72) Inventeur: Ponvianne, Gabriel, 68720 Luemschwiller (FR)
(74) Mandataire: Texier, Christian

(57) **Abrégé**

La présente invention concerne une pince destinée à tenir provisoirement un objet, tel qu'une bouteille ou un récipient similaire, par une zone de préhension telle qu'un col de cet objet.

La pince (1) comporte deux mors (35, 36) portés par une zone extrême (31, 32) d'une biellette respective (18, 19) articulée sur un support commun (2). Les biellettes (18, 19) sont retenues dans une positon correspondant à la position de fermeture des mors (35, 36) par des moyens (43, 44, 55, 56) comportant une paire d'éléments (55, 56) dont au moins l'un est un aimant permanent et dont l'autre est au moins sensible à une attraction magnétique.

Application par exemple à la réalisation de pinces destinées à retenir une bouteille ou un récipient similaire, par son col, dans une machine de rinçage.

## Description

La présente invention concerne une pince destinée à tenir provisoirement un objet, tel qu'une bouteille ou un récipient similaire, par une zone de préhension telle qu'un col de cet objet et comportant à cet effet :
- deux mors préhenseurs dont chacun présente un logement propre à épouser la zone de préhension sur une partie respective de la périphérie de celle-ci et qui sont susceptibles d'occuper l'un par rapport à l'autre une position de fermeture de la pince, dans laquelle les mors s'appliquent par leur logement sur une partie respective de la périphérie de la zone de préhension en enserrant celle-ci et une position d'ouverture de la pince, dans laquelle les mors définissent entre eux un espace de dégagement de la préhension,
- deux biellettes rigides dont chacune présente une première zone, extrême, portant solidairement un mors respectif et qui sont articulées par une deuxième zone sur un support autour d'axes mutuellement parallèles de façon à faire évoluer les mors de l'une à l'autre desdites positions par pivotement des biellettes autour de l'axe respectif par rapport au support,
- des moyens de commande du pivotement des biellettes autour de l'axe respectif par rapport au support dans le sens d'un passage de la position de fermeture à la position d'ouverture et inversement,
- des moyens de retenue des biellettes dans une position relative correspondant à la position de fermeture.

De telles pinces équipent par exemple des carrousels de rinçage de bouteilles ou récipients similaires, application dans laquelle elles ont pour fonction de saisir les bouteilles ou autres récipients par leur col, constituant alors la zone de préhension, de les retourner ensuite de 180° sur un bec respectif de rinçage, de les ramener ensuite à leur orientation d'origine et de les dégager enfin, au fur et à mesure de la rotation du carrousel qui amène successivement chacune d'entre elles d'un poste de prise en charge des bouteilles ou autres récipients à un poste d'évacuation de ces bouteilles ou autres récipients.

Cependant, pas plus les pinces selon l'invention que les pinces de l'art antérieur ne sont limitées à une telle application.

Quelle que soit l'application envisagée, il est préférable que la position relative des mors en position de fermeture puisse varier dans une certaine mesure, afin de permettre une tenue rigide de l'objet quelles que puissent être les tolérances dimensionnelles de sa zone de préhension.

A cet effet, dans les pinces actuellement connues, les mors sont retenus en position de fermeture par un ressort agissant entre des zones convenablement choisies des biellettes, ce qui permet d'obtenir une application ferme des mors sur la zone de préhension de l'objet même si les dimensions de cette zone varient dans une certaine mesure.

Cependant, cette solution connue n'est pas totalement satisfaisante en ce sens qu'un ressort fatigue dans le temps, ce qui aboutit à une application de moins en moins ferme des mors sur la zone de préhension de l'objet, voire peut casser, ce qui se traduit par une ouverture intempestive de la pince, libérant ainsi brutalement l'objet. Dans le cas de pinces montées sur des carrousels de rinçage, tournant à des vitesses suffisamment élevées pour soumettre les bouteilles ou récipients similaires à une force centrifuge importante, il en résulte un danger pour les personnels dans la mesure où la bouteille ou le récipient similaire lâché intempestivement par une pince dont le ressort est défaillant, peut être projeté avec violence à l'entour ; dans d'autres applications, il peut s'ensuivre simplement la chute de l'objet que la pince est destinée à tenir provisoirement, ce qui peut entraîner l'endommagement ou la destruction de cet objet.

De plus, dans le cas d'applications à l'industrie alimentaire, comme c'est le cas de l'application à la réalisation d'un carrousel de rinçage des bouteilles ou récipient similaire, les ressorts et leurs moyens d'accrochage sur les biellettes constituent des nids d'accumulation de bactéries, qui doivent être nettoyés avec soin, ce qui allonge et complique les opérations d'entretien.

Le but de la présente invention est de remédier à ces inconvénients et, à cet effet, la présente invention propose une pince du type indiqué en préambule, caractérisée ce que les moyens de retenue des biellettes dans la position relative correspondant à la position de fermeture comportent une paire d'éléments dont au moins l'un est un aimant permanent et dont l'autre est au moins sensible à une attraction magnétique et des moyens de liaison cinématique de chacun desdits éléments avec une troisième zone d'une biellette respective de telle sorte qu'en position de fermeture, lesdits éléments soient placés face à face dans une relation d'attraction mutuelle et qu'en position d'ouverture, lesdits éléments soient positionnés l'un par rapport à l'autre de telle sorte que ladite relation cesse ou soit rendue inopérante.

Ledit autre élément peut être simplement constitué par une pastille ou autre pièce ferromagnétique mais, de façon préférée, il est également constitué par un aimant permanent, ce qui permet de renforcer l'attraction magnétique mutuelle des deux éléments en position de fermeture, sous un encombrement réduit de chacun de ces deux éléments. Dans le cas d'une pince symétrique par rapport à un plan parallèle aux axes d'articulation des biellettes sur le support, ce qui constituera le cas le plus fréquent bien que l'on puisse également envisager la réalisation selon l'invention de pinces dissymétriques, le fait de réaliser chacun desdits éléments sous forme d'un aimant permanent permet de réaliser à l'identique les moyens de liaison cinématique de chacun des ces éléments avec la biellette respective, et par conséquent de simplifier la réalisation de la pince et la tenue des stocks de composants pour celle-ci.

Un Homme du métier comprendra que le remplacement du ressort des pinces de l'art antérieur par des moyens magnétiques de retenue des biellettes dans leur position relative correspondant à la position de fermeture permet de conserver une possibilité d'adaptation de la position relative des mors en position de fermeture, en fonction des dimensions de la zone de préhension de l'objet à retenir telle que le col d'une bouteille ou un récipient similaire, tout en supprimant les incidents dus à la fatigue et à la casse des ressorts. En outre, il est possible de monter les éléments assurant la retenue magnétique des biellettes dans leur position correspondant à la position de fermeture de façon à ne créer aucun recoin dans lequel pourraient s'accumuler des bactéries, ce qui réduit les risques à cet égard et facilite considérablement les opérations de nettoyage.

La liaison cinématique entre chaque biellette et l'élément correspondant peut être assurée par différents moyens mais, de façon particulièrement simple à la réalisation et fiable à l'utilisation, les moyens utilisés à cet effet peuvent avantageusement comporter un palonnier respectif articulé d'une part sur la troisième zone de la biellette respective et d'autre part sur l'autre palonnier, autour d'axes parallèles entre eux et avec les axes d'articulation des biellettes sur le support. Alors lesdits éléments sont portés solidairement par des zones des palonniers qui sont approximativement jointives mutuellement en position de fermeture et sensiblement disjointes mutuellement en position d'ouverture, et les moyens de commande comportent des moyens pour déplacer coercitivement l'axe d'articulation mutuelle des palonniers alternativement dans le sens d'un rapprochement et dans le sens d'un éloignement par rapport aux mors, par exemple sous forme d'un galet suiveur de came, monté à la rotation sur les palonniers autour de leur axe d'articulation mutuelle et à la translation sur le support suivant une direction perpendiculaire à cet axe et passant entre les axes d'articulation des biellettes sur le support. Cette conception des moyens de commande est tout spécialement appropriée lorsque la pince est destinée à être montée sur un carrousel, dont des chemins de came appropriés agissent alors sur le galet successivement dans le sens de la fermeture et dans le sens de l'ouverture des mors, au fur et à mesure de la rotation de la pince avec le carrousel, d'une façon bien connue en elle-même dans la technique des carrousels.

En particulier lorsque l'objet tenu par la pince en position de fermeture subit des sollicitations importantes dans le sens d'une extraction hors de la pince, c'est-à-dire soumet celle-ci à des efforts importants dans le sens de l'ouverture, comme ce peut être le cas lorsque la pince est montée sur un carrousel et l'objet soumis à la force centrifuge, il peut être judiciaire de faire travailler les éléments assurant la retenue magnétique des biellettes dans leur position relative correspondant à la position de fermeture dans des conditions telles que l'attraction magnétique entre ces éléments soit suffisante pour permettre aux mors en position de fermeture de résister efficacement aux sollicitations que l'objet leur fait subir dans le sens de l'ouverture, c'est-à-dire pour rendre la position de fermeture sensiblement irréversible dans les conditions normales de fonctionnement de la pince.

On optimise à cet égard la transmission des efforts entre les éléments assurant la retenue magnétique des biellettes dans leur position relative correspondant à la position de fermeture et les mors occupant cette position de fermeture en choisissant comme deuxième et troisième zones, de façon préférée, respectivement une zone intermédiaire et une zone extrême de la biellette opposée à la zone de celle-ci portant le mors correspondant.

Dans ce cas, on aboutit à un mode de réalisation particulièrement simple des palonniers si l'on choisit de situer à l'opposé des mors par rapport à l'axe d'articulation mutuelle des palonniers, en position de fermeture, la zone de ces derniers qui porte les éléments assurant la retenue relative des biellettes dans leur position magnétique correspondant à la position de fermeture.

Également, ce positionnement des deuxième et troisième zones des biellettes permet d'obtenir efficacement une irréversibilité de la position de fermeture des mors puisqu'il est alors possible de prévoir que l'axe d'articulation des palonniers soit situé entre les axes d'articulation des palonniers sur les biellettes et approximativement coplanaire avec eux en position de fermeture. Dans un tel cas, une tendance des mors à quitter leur position de fermeture sous l'effet des efforts que leur impose l'objet qu'ils tiennent se traduit par une tendance des axes d'articulation des palonniers sur les biellettes à se rapprocher mutuellement, et cette tendance se traduit elle-même par l'application d'efforts approximativement antagonistes au niveau de l'axe d'articulation mutuel des palonniers, avec une composante nulle ou pratiquement nulle dans le sens d'un déplacement de cet axe de sa position correspondant à la position de fermeture des mors à sa position correspondant à la position d'ouverture de ces derniers.

Ainsi, contrairement à la plupart des pinces de l'Art antérieur, dont l'irréversibilité en position de fermeture est douteuse, la pince selon l'invention offre toute sécurité à l'encontre d'une ouverture intempestive, et ceci même si l'on utilise un ou des aimants permanents peu puissants, c'est-à-dire opposant peu de résistance à un passage commandé de la position d'ouverture à la position de fermeture, en particulier par l'application d'un effort approprié sur le galet précité.

D'autres caractéristiques et avantages d'une pince selon l'invention ressortiront de la description ci-dessous, relative à un exemple non limitatif de réalisation, ainsi que des dessins annexés qui font partie intégrante de cette description.

La figure 1 montre une pince selon l'invention en position de fermeture sur le col d'une bouteille, en élévation latérale.

La figure 2 montre une vue en plan, de dessus, dans un sens repéré en II à la figure 1, de la pince dans cette position de fermeture.

La figure 3 montre, en une vue similaire à celle de la figure 2 mais simplifiée, la pince en position d'ouverture.

La figure 4 montre, en une vue correspondant à celle de la figure 2 mais simplifiée, la pince dans une position de fermeture avec compensation d'un surdimensionnement du col de la bouteille, la figure 2 correspondant à une position de fermeture maximale, correspondant aux dimensions minimales du col dans des limites normales des tolérances à cet égard.

Sur l'ensemble de ces figures, la pince 1 est illustrée dans une application à l'équipement d'un carrousel de rinçage de bouteilles, cette application ne constituant toutefois qu'un exemple non limitatif d'application d'une pince selon l'invention.

Dans le cadre de cette application, elle comporte un support 2 présentant la forme générale d'une chappe symétrique par rapport à un plan moyen 3 qui constitue un plan moyen de symétrie pour l'ensemble de la pince, est orienté verticalement dans l'exemple illustré et inclut l'axe non représenté, lui-même vertical, de rotation du carrousel par rapport à un bâti de la machine de rinçage, quant à lui fixe par rapport au sol. L'architecture générale d'une telle machine de rinçage est bien connue d'un Homme du métier et ne sera par conséquent pas décrite.

La pince 1 présente un autre plan moyen de symétrie 4 qui est horizontal dans l'orientation illustrée, dans laquelle la bouteille 5 dont le col 6 est retenu par la pince 1 présente un axe vertical 7 alors que son goulot 8, auquel le col 6 est directement adjacent, est tourné vers le haut.

En relation avec cette orientation de la pince 1, le support 2 en forme de chappe est situé au-dessus du plan 4 et présente :
- une âme 9 en forme de barrette rectiligne, chevauchant le plan 3 et présentant un autre plan moyen de symétrie 10 coupant perpendiculairement les deux plans 3 et 4, et
- deux branches 11 également en forme de barrette rectiligne, parallèles au plan 3 et mutuellement symétriques par rapport à celui-ci, chacune de ces branches 11 se raccordant à une extrémité respective de l'âme 9 et étant ascendante à partir de son raccordement à cette dernière, obliquement par rapport aux deux plans 3 et 10, jusqu'à une extrémité libre respective 12 à proximité immédiate de laquelle les deux branches 11 sont montées au pivotement sur un arbre non représenté du carrousel, autour d'un axe 13 perpendiculaire au plan 3 et ainsi situé au-dessus du plan 4.

Ainsi, la pince 1 peut pivoter autour de l'axe 13 par rapport au carrousel, entre l'orientation illustrée et une orientation non illustrée dans laquelle l'axe 7 est encore vertical mais le goulot 8 est tourné vers le bas, en pratique au-dessus d'un bec de rinçage non représenté.

Pour permettre de commander le passage de la pince 1 et de la bouteille 5 qu'elle porte de l'une à l'autre de ces orientations, le support 2 porte solidairement, par exemple par l'une de ses branches 11, un patin 14 qui est disposé à l'opposé de l'axe 13 par rapport au plan 4, c'est-à-dire en dessous de ce plan 4 dans l'orientation illustrée aux figures, et qui coulisse, au fur et à mesure de la rotation du carrousel, sur un rail non représenté, formant chemin de came, qui fait le tour du carrousel et qui est quant à lui fixe par rapport au bâti de la machine, dans des conditions aisément compréhensibles par un Homme du métier.

Ce mode de montage de la pince 1 sur un carrousel et de liaison avec un rail formant came, provoquant des changements d'orientation au fur et à mesure de la rotation du carrousel, sont indifférents au regard de la présente invention et ne seront pas davantage détaillés.

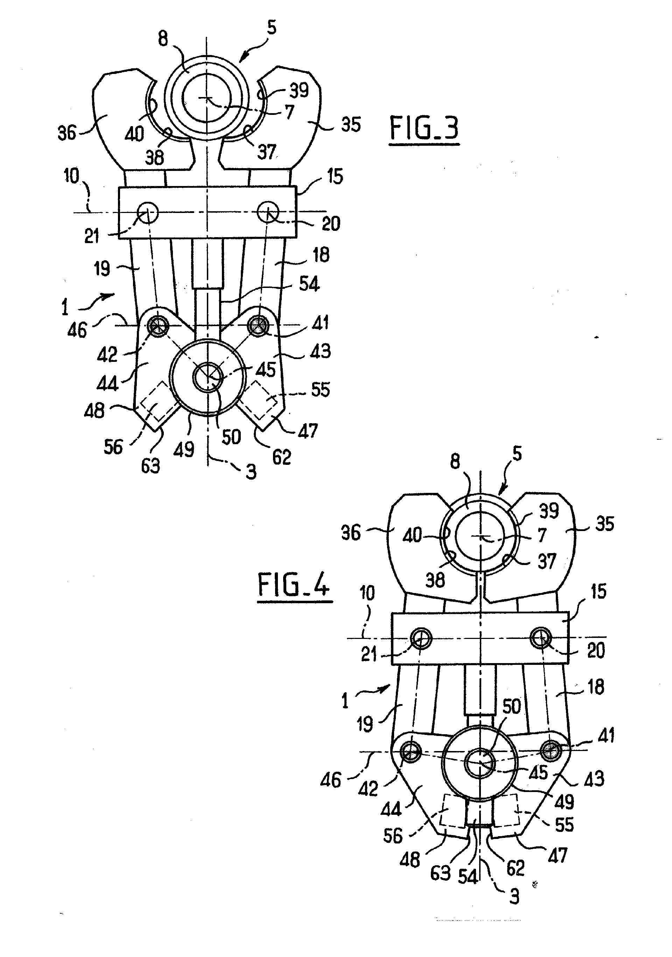

Pour la suite de la présente description, on considérera la pince 1 comme fixe dans l'orientation illustrée, dans laquelle le plan 4 est horizontal, le goulot 8 de la bouteille 5 tourné vers le haut et l'axe 7 de celle-ci vertical. Le support 2 a d'ailleurs été omis aux figures 3 et 4, qui montrent exclusivement la pince 1 proprement dite et la bouteille 5.

Immédiatement en dessous de l'âme 9 mais au-dessus du plan 4, le support 2 en forme de chappe porte solidairement une barrette rectiligne 15 qui est orientée perpendiculairement au plan 3, disposée symétriquement par rapport à celui-ci, et longe l'âme 9 de l'une à l'autre de ses extrémités, c'est-à-dire de son raccordement avec l'une des branches 11 à son raccordement avec l'autre de ces branches 11. Sous le plan 4 est disposé une autre barrette 16 également rectiligne, symétrique de la barrette 15 par rapport au plan 4 mais espacé de ce dernier, comme la barrette 15 à laquelle elle est ainsi parallèle, de telle sorte que les deux barrettes 15 et 16 définissent entre elles un espace 17 dans lequel sont insérées deux biellettes rectilignes 18, 19 disposées respectivement de part et d'autre du plan 3, mutuellement symétriques par rapport à ce plan 3 et respectivement symétrique par rapport au plan 4. Chacune de ces biellettes 18, 19 est articulée sur les deux barrettes 15, 16 autour d'un axe respectif 20, 21, les deux axes 20, 21 étant disposés dans le plan 10, mutuellement parallèles et mutuellement symétriques par rapport au plan 3.

Dans l'orientation illustrée, les deux axes 20 et 21 sont verticaux, comme le plan 10.

Chacun des axes 20, 21 est par exemple défini par un boulon respectif 22, 23 qui traverse suivant l'axe respectif 20, 21 un trou respectif des deux barrettes 15, 16 et de la biellette 18, 19 respectivement correspondante, et peut avantageusement présenter une tête telle que 24 en appui vers le haut sous la barrette 16, qui constitue la barrette inférieure dans l'orientation illustrée, traverser de part en part les trous respectifs précités des barrettes 16, de la biellette 18 ou 19 respectivement correspondante et de la barrette 15 par une tige respective 25, 26, et se visser par une extrémité filetée de cette tige 25, 26 dans un trou taraudé respectif 27, 28 de l'âme 9 du support 2, ce que réalise l'assemblage de la pince 1 proprement dite à celui-ci.

Les axes 20 et 21 sont situés dans une zone 29, 30 de la biellette correspondante 18, 19 intermédiaire entre deux zones extrêmes de celle-ci, à savoir une zone extrême respective 31, 32 située du même côté du plan 10 que l'axe 13 et une zone extrême respective 33, 34 située de l'autre côté de ce plan 10.

Dans sa zone extrême 31, 32 chacune des biellettes 18 et 19 porte solidairement un mors respectif 35, 36 dont la conception, connue en elle-même, est propre à assurer le maintien rigide du col 6 de la bouteille 5, dans une position relative précise, lorsque la pince 1 est en position de fermeture.

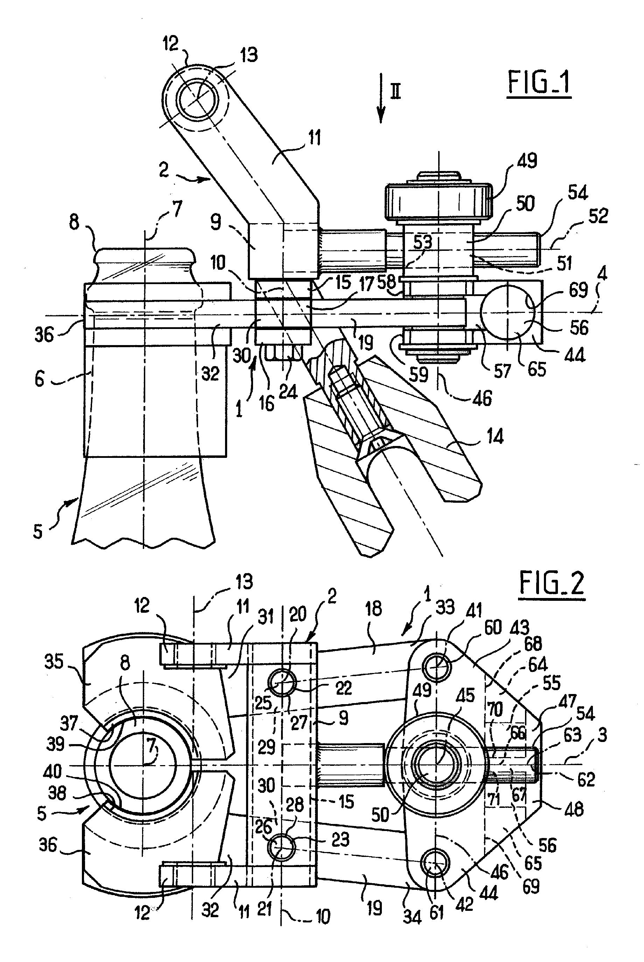

A cet effet, chacun des deux mors 35 et 36, qui sont disposés d'un côté respectif du plan 3 et sont mutuellement symétriques par rapport à celui-ci tout en étant respectivement symétriques par rapport au plan 4, présente autour de l'axe 7, vers celui-ci, un logement respectif 37, 38 présentant une forme générale qui, en référence à la position de fermeture illustrée aux figures 1 et 2, est une forme de révolution autour de cet axe 7 avec un développement angulaire, en référence à cet axe, compris dans l'exemple illustré entre 90° et 180°, à savoir plus précisément de l'ordre de 135°, entre une zone extrême des évidements 37 et 38 qui est la plus proche du plan 10 et se situe à proximité immédiate du plan 3, et une zone extrême de ces évidements qui est la plus éloignée du plan 10 et qui, ainsi, est plus éloignée du plan 3. Ces valeurs ne sont toutefois indiquées qu'à titre d'exemple non limitatif, et d'autres valeurs pourraient être choisies sans que l'on sorte pour autant du cadre de l'invention.

Chacun des logements 37 et 38 est conformé, de façon non illustrée mais aisément concevable par un Homme du métier, pour recevoir et retenir de façon solidaire mais amovible une mordache respective 39, 40 présentant également une forme de révolution autour de l'axe 7 et présentant le même développement angulaire que le logement respectif 37, 38, dans une même position que ce logement 37, 38 par rapport aux plans 3 et 10. Chacune des mordaches 39, 40 présente une conformation étroitement adaptée à celle du col 6 de la bouteille 5 de telle sorte que la pince 1 en position de fermeture retienne le col 6 rigidement, dans une position relative déterminée. La conception des mordaches 39, 40 à cet effet relève également des aptitudes normales d'un Homme du métier. De même, un tel Homme du métier pourrait aisément adapter la conformation des mors 35, 36 et des mordaches 39, 40 au cas où la pince 1 devrait assurer la préhension d'objets autres que des bouteilles, en fonction de la conformation d'un col ou, plus généralement, d'une zone de préhension de ces objets.

Par son autre zone extrême 33, 34, chacune des biellettes 18, 19 est articulée autour d'un axe respectif 41, 42, parallèle aux axes 20, 21, sur un palonnier respectif 43, 44, les deux palonniers 43 et 44 étant en outre articulés entre eux autour d'un axe 45 également parallèle aux axes 21 22.

Plus précisément, si l'on se réfère à la position de fermeture illustrée aux figures 1 et 2, les axes 41 et 42 occupent la même position sur la biellette respective 18, 19 par rapport à l'axe 20, 21 d'articulation de cette biellette sur les barrettes 15, 16 et sur le support 2 et sont disposés symétriquement l'un de l'autre par rapport au plan 3, respectivement de part et d'autre de celui-ci, et l'axe 45 est disposé entre ces deux axes 41 et 42, suivant le plan 3, et plus précisément à l'intersection de ce plan 3 avec un plan 46 défini par les deux axes 41 et 42.

Ainsi, toute tentative pour écarter les mors 35 et 36 l'un de l'autre se traduit, par effet de levier de chacune des biellettes 18 et 19, dont l'écartement mutuel au niveau des axes 20 et 21 ne peut changer, par une tendance des axes 41 et 42 à se rapprocher mutuellement, c'est-à-dire par l'exercice, sur les palonniers 43 et 44, d'efforts antagonistes perpendiculaires à l'axe 45, ce qui ne peut en pratique pas provoquer de pivotement relatif des palonniers 43 et 44 autour de cet axe, alors qu'un tel pivotement est indispensable à un rapprochement mutuel des axes 41 et 42 et à un éloignement mutuel des mors 35 et 36.

En outre, conformément à la présente invention, des moyens magnétiques 55, 56 sont prévus pour retenir les biellettes 18, 19 dans la position correspondant à la position de fermeture de la pince telle qu'illustrée aux figures 1 et 2, de même qu'une que dans une position correspondant approximativement à la position de fermeture, telle qu'illustrée à la figure 4. Dans l'exemple illustré, ces moyens 55, 56 sont portés par les palonniers 43 et 44 dans lesquels, plus précisément, ils sont logés dans une zone respective 47, 48 de ces palonniers 43, 44 qui est située à l'opposé des mors 36 et 37 par rapport à l'axe 45 d'articulation mutuelle des palonniers 43, 44 en position de fermeture, c'est-à-dire dans des zones 47, 48 qui s'éloignent mutuellement si l'axe 45 se décale par rapport au plan 46 dans le sens d'un éloignement par rapport aux mors 35 et 36, ce qui correspond à un rapprochement mutuel des axes 41 et 42 et, par conséquent à un éloignement mutuel des mors 36 et 37 qui, ainsi, peuvent gagner une position d'ouverture illustrée à la figure 3. Dans cette position d'ouverture, les limites des logements 37 et 38 ou des mordaches 39 et 40 qui sont les plus éloignées du plan 10 sont suffisamment écartées l'une de l'autre pour autoriser le dégagement du col 6 de la bouteille 5 dans le sens d'un éloignement par rapport au plan 10 ou, à l'inverse l'engagement du col 6 d'une bouteille 5 entre les mors 35 et 36 dans le sens d'un rapprochement par rapport au plan 10, étant entendu qu'un retour de l'axe 45 dans le plan 46 permet ensuite de ramener les mors 35 et 36 à leur position de fermeture telle qu'illustrée aux figures 1 et 2 ou dans une position proche de cette position de fermeture telle qu'illustrée à la figure 4, par l'intermédiaire des palonniers 43 et 44 et des biellettes 18, 19 qui regagnent ainsi leur position correspondant à la position de fermeture, au moins approximativement.

Pour permettre d'appliquer ainsi de façon volontaire, à l'axe 45, des mouvements de décalage par rapport au plan 46 puis de retour dans ce plan 46, c'est-à-dire pour appliquer ainsi aux mors 35 et 36 des mouvements d'ouverture et de fermeture autour du col 6 d'une bouteille 5, les deux palonniers 43 et 44 portent conjointement, à la rotation autour de l'axe 45 au-dessus du plan 4 si l'on se réfère à la position illustrée aux figures 1 et 2, un galet 49 apte à coopérer, à l'effet de ces déplacements de l'axe 45, avec une came non représentée, prévue à cet effet autour du carrousel et montée solidairement sur le bâti de la machine.

Afin d'assurer un maintien de l'axe 45 dans le plan 3 lors de ses mouvements par rapport au plan 46, commandés au moyen du galet 49 et de la came non représentée coopérant avec celui-ci, une broche 50 sur laquelle le galet 49 et chacun des palonniers 43 et 44 sont montés à la rotation libre, indépendamment l'un de l'autre, autour de l'axe 45 est munie, entre le galet 49 et les palonniers 43 et 44, d'un passage traversant 51 délimité par une face périphérique intérieure 53 cylindrique de révolution autour d'un axe 52 parallèle au plan 4 et retenu dans le plan 3 par engagement coaxial et guidage au coulissement coaxial relatif, dans ce passage 50, d'une tige 54 portée solidairement par l'âme 9 du support 2, au-dessus du plan 4 et plus précisément en porte-à-faux au-dessus des palonniers 43 et 44, entre ces derniers et le galet 49, dans la position de la pince 1 illustrée aux figures. La dimension de la tige 54 suivant l'axe 52 est suffisante pour conserver cet engagement dans le passage 51 de la broche 50, et le guidage qui s'ensuit pour la broche 50 et l'axe 45, de l'une à l'autre des positons de fermeture et d'ouverture illustrées respectivement aux figures 1 et 2 et à la figure 3, de même que dans toute position intermédiaire telle que la position illustrée à la figure 4.

La conformation des palonniers 43 et 44 notamment en vue de leur articulation mutuelle autour de l'axe 45, par l'intermédiaire de la broche 50, et de leur articulation respectivement sur la biellette 18 autour de l'axe 41 et sur la biellette 19 autour de l'axe 42, de même que pour définir les zones 47 et 48 de réception solidaire d'un élément respectif 55, 56 des moyens magnétiques de retenue des biellettes 18, 19 dans la position de fermeture, peut varier dans une large mesure, si bien que ces palonniers 43 et 44 ne seront décrits que dans leurs grandes lignes.

Dans une vue en plan, chacun des palonniers 43, 44 présente une forme générale proche de celle d'un trapèze rectangle qui, en référence à la position de fermeture illustrée en particulier à la figure 2, présente :
- sa grande base approximativement perpendiculairement au plan 3, entre les plans 46 et 10,
- sa petite base approximativement perpendiculairement au plan 3, du côté du plan 46 opposé au plan 10,
- son côté oblique au plus loin du plan 3, et
- son côté perpendiculaire aux deux bases suivant le plan 3.

Plus précisément, pour recevoir la zone extrême 33, 34 de la biellette 18, 19 respectivement associée, chaque palonnier 43, 44 est creusé autour de l'axe d'articulation respectivement correspondant 41, 42, suivant le plan 4, d'un logement respectif tel que 57, au-dessus et en dessous duquel chaque palonnier 43, 44 présente une aile plate respective telle que 58, 59, parallèle au plan 4 par rapport auquel les deux ailes telles que 58 et 59 d'un même palonnier sont mutuellement symétriques et dont ces ailes sont espacées de façon à s'appliquer à plat respectivement au-dessus et au-dessous de la biellette 18, 19 respectivement associée. Suivant l'axe d'articulation respectif 41, 42, les deux ailettes telles que 58, 59 sont percées, de même que la biellette 18, 19 respectivement correspondante, d'un trou de réception coaxiale d'un pivot respectif 60, 61 qui est fixé par exemple par vissage dans l'aile supérieure telle que 58 et traverse de part en part le logement tel que 57 ainsi que la zone extrême 33, 34 de la biellette 18, 19 correspondante.

L'articulation mutuelle des palonniers 43 et 44 autour de l'axe 45 est assurée par engagement coaxial de la broche 50 dans des trous traversants aménagés suivant cet axe dans l'un et l'autre des palonniers 43 et 44 qui, à ce niveau et par dérogation à la symétrie générale des composants de la pince 1 par rapport au plan 3, peuvent constituer, autour de l'axe 45, des ailes plates perpendiculaires à cet axe 45, mutuellement espacées suivant cet axe et mutuellement intercalées d'un palonnier 43, 44 à l'autre, de façon bien connue dans le domaine de la réalisation d'articulations entre deux pièces. On observera que ce mode de coopération des deux palonniers 43 et 44 autour de l'axe 45 peut s'accompagner d'une identité des deux palonniers 43 et 44, dans des conditions propres à faciliter la fabrication et la tenue des stocks de pièces détachées.

Par contre, dans les zones 47 et 48, les palonniers 43 et 44 sont massifs et présentent l'un vers l'autre un chant plan respectif 62, 63 situé dans un plan incluant l'axe 45 et, plus précisément, suivant le plan 3 le long duquel les chants 62 et 63 sont en appui mutuel dans la position de fermeture illustrée aux figures 1 et 2. Par contre, les deux chants 62 et 63 sont mutuellement espacés, en divergeant l'un par rapport à l'autre dans le sens d'un éloignement par rapport à l'axe 45, dans la position d'ouverture illustrée à la figure 3, de même que dans toute position intermédiaire entre les positions de fermeture illustrées aux figures 1 et 2 et la position d'ouverture illustrée à la figure 3, et en particulier dans la position illustrée à la figure 4.

Pour contribuer à la retenue de la pince dans sa position de fermeture ou dans une position proche de celle-ci, les éléments 55 et 56, dont l'un est un aimant permanent et dont l'autre peut être simplement en matériau ferromagnétique mais est également de préférence un aimant permanent, sont logés à l'intérieur des zones 47 et 48 des palonniers 43 et 44, respectivement à proximité immédiate du chant 62 et à proximité immédiate du chant 63, de façon à s'attirer mutuellement dans la position de fermeture illustrée aux figures 1 et 2, de même que dans la position relative, voisine de cette position, illustrée à la figure 4, sans toutefois exercer d'attraction mutuelle sensible, c'est-à-dire apte à provoquer un retour à la position de fermeture, dans la position d'ouverture illustrée à la figure 3.

A cet effet, les éléments 55 et 56 peuvent être placés en affleurement direct du chant 62, 63 du palonnier respectivement correspondant 43, 44 mais lorsque, comme il est fréquent notamment pour des raisons d'hygiène, les palonniers 43 et 44 sont réalisés en un matériau amagnétique tel que de l'acier inoxydable, comme l'ensemble des composants de la pince 1, ils peuvent également être placés légèrement en retrait par rapport à ce chant, comme c'est le cas dans l'exemple illustré.

Plus précisément, dans cet exemple, chacun des palonniers 43 et 44 est percé dans la zone 47, 48, depuis son côté opposé au plan 3 si l'on se réfère à la position de fermeture illustrée aux figures 1 et 2, d'un trou borgne respectif 64, 65, laissant subsister un voile 66, 67 du matériau constitutif du palonnier 43, 44 à proximité du chant 62, 63, respectivement. Par exemple, les deux trous borgnes 64 et 65 sont délimités par une face périphérique intérieure 68, 69 cylindrique de révolution, avec un diamètre identique, autour d'un axe non référencé qui est orienté perpendiculairement à l'axe 3 dans la position de fermeture illustrée à la figure 2, les axes respectifs des faces 68 et 69 coïncidant alors, et par un fond plan 70, 71 perpendiculaire à cet axe et situé à faible distance du chant respectivement correspondant 62, 63 suivant cet axe, de façon à définir le voile précité 66, 67, respectivement.

Dans chacun des trous borgnes 64 et 65 ainsi conçus est engagé et retenu solidairement, en appui contre le fond respectif 70, 71, l'un, respectif, des éléments 55 et 56 qui, par exemple, présentent respectivement à cet effet la forme d'un tronçon d'un barreau à section circulaire, d'un diamètre sensiblement identique à celui-ci des faces périphériques 68 et 69, tronçonné à angle droit pour définir des faces frontales planes dont l'une s'applique à plat contre le fond 70, 71 du trou borgne correspondant 62, 63.

Le mode de retenue solidaire de chacun de ces éléments 55 et 56 à l'intérieur du trou borgne respectivement correspondant 64, 65 peut être assuré par divers moyens, parmi lesquels on peut citer un emmanchement à force, un collage, une retenue amovible par une bague annulaire fendue ou par une bague annulaire vissée, ces exemples n'étant nullement limitatifs.

On observera que la disposition relative des axes 20, 21, 41, 42, 45 telle qu'elle a été décrite permet d'obtenir une retenue de la pince 1 dans sa position de fermeture illustrée aux figures 1 et 2 sans que l'attraction magnétique mutuelle des éléments 55 et 56 soit considérable.

Cette retenue est cependant encore efficace lorsque, pour des raisons de tolérances dans les dimensions du col 6 de la bouteille 5 perpendiculairement à son axe 7, l'axe 45 est légèrement décalé par rapport au plan 46 et les chants 62, 63 légèrement décollés l'un de l'autre alors que les mordaches 39 et 40 s'appliquent fermement, vers l'axe 7, sur le col 6 de la bouteille 5, comme on l'a illustré à la figure 4. Ainsi, la pince selon l'invention 1 peut retenir efficacement des bouteilles 5 dont les cols 6 présentent certaines tolérances de dimensionnement perpendiculairement à leur axe 7, la position de fermeture illustrée à la figure 2 correspondant à la limite inférieure de dimensionnement d'un col 6 perpendiculairement à son axe 7 si l'on souhaite une retenue rigide par la pince 1 et la figure 4 à la limite supérieure de dimensionnement. A cet effet, ou encore à des valeurs intermédiaires de dimensionnement, les différents composants de la pince 1 sont dessinés et les éléments 55 et 56 choisis de telle sorte que même si le col 6 présente perpendiculairement à l'axe 7 les dimensions maximales admises dans la limite des tolérances, l'attraction magnétique mutuelle des éléments 55 et 56 soit suffisante pour assurer la retenue de la bouteille par son col 6, compte tenu également du positionnement qui est alors celui de l'axe 45 par rapport au plan 46, d'une part, et de l'orientation relative qu'occupent alors les chants 62 et 63, d'autre part.

Un Homme du métier comprendra aisément que le mode de réalisation d'une pince 1 selon l'invention qui vient d'être décrit ne constitue qu'un exemple non limitatif, cependant actuellement préféré, par rapport auquel on pourra prévoir de nombreuses variantes sans sortir pour autant du cadre de cette invention, dès lors que des éléments susceptibles d'exercer une attraction magnétique entre eux seront utilisés pour assurer la retenue de la pince en position de fermeture, de préférence en complément d'un positionnement relatif judicieux, à cet effet, des axes d'articulation relative des différents composants de la pince.

## Revendications

1. Pince destinée à tenir provisoirement un objet (5), tel qu'une bouteille ou un récipient similaire, par une zone de préhension telle qu'un col (6) de cet objet (5) et comportant à cet effet :
- deux mors préhenseurs (35, 36) dont chacun présente un logement (37, 38) propre à épouser la zone de préhension (6) sur une partie respective de la périphérie de celle-ci et qui sont susceptibles d'occuper l'un par rapport à l'autre une position de fermeture de la pince (1), dans laquelle les mors (35, 36) s'appliquent par leur logement (37, 38) sur une partie respective de la périphérie de la zone de préhension (6) en enserrant celle-ci et une position d'ouverture de la pince (1), dans laquelle les mors (53), 36 définissent entre eux un espace de dégagement de la zone de préhension (6),
- deux biellettes rigides (18, 19) dont chacune présente une première zone (31, 32), extrême, portant solidairement un mors respectif (35, 36) et qui sont articulées par une deuxième zone (29, 30) sur un support (2) autour d'axes (20, 21) mutuellement parallèles de façon à faire évoluer les mors (35, 36) de l'une à l'autre desdites positions par pivotement des biellettes (18, 19) autour de l'axe respectif (20, 21) par rapport au support (2),
- des moyens (43, 44, 49) de commande du pivotement des biellettes (18, 19) autour de l'axe respectif (20, 21) par rapport au support (2) dans le sens d'un passage de la position de fermeture à la position d'ouverture et inversement,
- des moyens (43, 44, 55, 56) de retenue des biellettes (18, 19) dans une position relative correspondant à la position de fermeture,
**caractérisée en ce que** les moyens (43, 44, 55, 56) de retenue des biellettes (18, 19) dans la position relative correspondant à la position de fermeture comportent une paire d'éléments (55, 56) dont au moins l'un est un aimant permanent et dont l'autre est au moins sensible à une attraction magnétique et des moyens (43, 44) de liaison cinématique de chacun desdits éléments (55, 56) avec une troisième zone (33, 34) d'une biellette (18, 19) respective de telle sorte qu'en position de fermeture, lesdits éléments (55, 56) soient placés face à face dans une relation d'attraction mutuelle et qu'en position d'ouverture, lesdits éléments (55, 56) soient positionnés l'un par rapport à l'autre de telle sorte que ladite relation cesse ou soit rendue inopérante.

2. Pince selon la revendication 1, **caractérisée en ce que** ledit autre élément est également un aimant permanent.

3. Pince selon l'une quelconque des revendications 1 et 2, **caractérisée en ce qu'**elle est symétrique par rapport à un plan (3) parallèle aux axes (20, 21) d'articulation des biellettes (18, 19) sur le support (2).

4. Pince selon l'une quelconque des revendications 1 à 3, **caractérisée :**
- **en ce que** les moyens (43, 44) de liaison cinématique entre chaque biellette (18, 19) et l'élément (55, 56) correspondant comportent un palonnier respectif (43, 44) articulé d'une part sur la troisième zone (33, 34) de la biellette (18, 19) respective et d'autre part sur l'autre palonnier (44, 43), autour d'axes (41, 42, 45) parallèles entre eux et avec les axes (20, 21) d'articulation des biellettes (18, 19) sur le support (2),
- **en ce que** lesdits éléments (55, 56) sont portés solidairement par des zones (47, 48) des palonniers (43, 44) qui sont approximativement jointives mutuellement en position de fermeture et sensiblement disjointes mutuellement en position d'ouverture, et
- **en ce que** les moyens de commande (43, 44, 49) comportent des moyens (49) pour déplacer coercitivement l'axe (45) d'articulation mutuelle des palonniers (43, 44) alternativement dans le sens d'un rapprochement et dans le sens d'un éloignement par rapport aux mors (35, 36).

5. Pince selon la revendication 4, **caractérisée en ce que** les deuxième (29, 30) et troisième (33, 34) zones sont respectivement une zone intermédiaire (29, 30) et une autre zone extrême (33, 34) de la biellette (18, 19), opposée à ladite première zone (31, 32).

6. Pince selon la revendication 5, **caractérisée en ce que** ladite zone (47, 48) des palonniers (43, 44) est située à l'opposé des mors (35, 36) par rapport à l'axe (45) d'articulation mutuelle des palonniers (43, 44) en position de fermeture.

7. Pince selon l'une quelconque des revendications 5 et 6, **caractérisée en ce que** l'axe (45) d'articulation mutuelle des palonniers (43, 44) est situé entre les axes (41, 42) d'articulation des palonniers (43, 44) sur les biellettes (18, 19) et approximativement coplanaire avec eux en position de fermeture.

8. Pince selon l'une quelconque des revendications 4 à 7, **caractérisée en ce que** les moyens de commande (43, 44, 49) comportent un galet (49) suiveur de came, monté à la rotation sur les palonniers (43, 44) autour de leur axe (45) d'articulation mutuelle et à la translation sur le support (2) suivant une direction (52) perpendiculaire à cet axe (45) et passant entre les axes (20, 21) d'articulation des biellettes (18, 19) sur le support (2).
